# EUROPEAN PATENT SPECIFICATION

(11) **EP 3 073 773 B1**
(45) Date of publication and mention of the grant of the patent: **27.11.2019**
(21) Application number: 15201541.8
(22) Date of filing: 21.12.2015
(51) Int. Cl.: H04W 8/18, H04W 8/20, H04L 29/08, H04B 1/3816, H04W 12/06, H04L 29/12, H04W 12/00

(54) **METHODS FOR PERFORMING A REMOTE MANAGEMENT OF A MULTI-SUBSCRIPTION SIM MODULE, AND CORRESPONDING SIM MODULE AND COMPUTER PROGRAM PRODUCT**
VERFAHREN ZUR DURCHFÜHRUNG EINER FERNVERWALTUNG EINES SIM-MODULS MIT MEHRFACHABONNEMENT UND ENTSPRECHENDES SIM-MODUL SOWIE COMPUTERPROGRAMMPRODUKT
PROCÉDÉS PERMETTANT D'EFFECTUER UNE GESTION À DISTANCE D'UN MODULE SIM À ABONNEMENTS MULTIPLES ET MODULE SIM CORRESPONDANT ET PRODUIT DE PROGRAMME INFORMATIQUE

(30) Priority: 23.03.2015 IT TO20150182
(43) Date of publication of application: 28.09.2016
(73) Proprietor: STMicroelectronics S.r.l., 20864 Agrate Brianza (MB) (IT)
(72) Inventor: VENEROSO, Amedeo, I-81100 Caserta (IT)
(74) Representative: Meindl, Tassilo

(56) References cited:
- EP-A1- 2 273 748
- EP-A1- 2 475 215
- WO-A1-2013/027085
- WO-A2-2006/022578
- US-A1- 2005 164 737
- US-A1- 2011 217 997
- US-A1- 2013 023 235
- US-A1- 2013 023 309
- US-A1- 2014 195 927

## Description

### Technical Field

Embodiments of the present disclosure relate to techniques for performing a remote management of a multi-subscription SIM module.

### Background

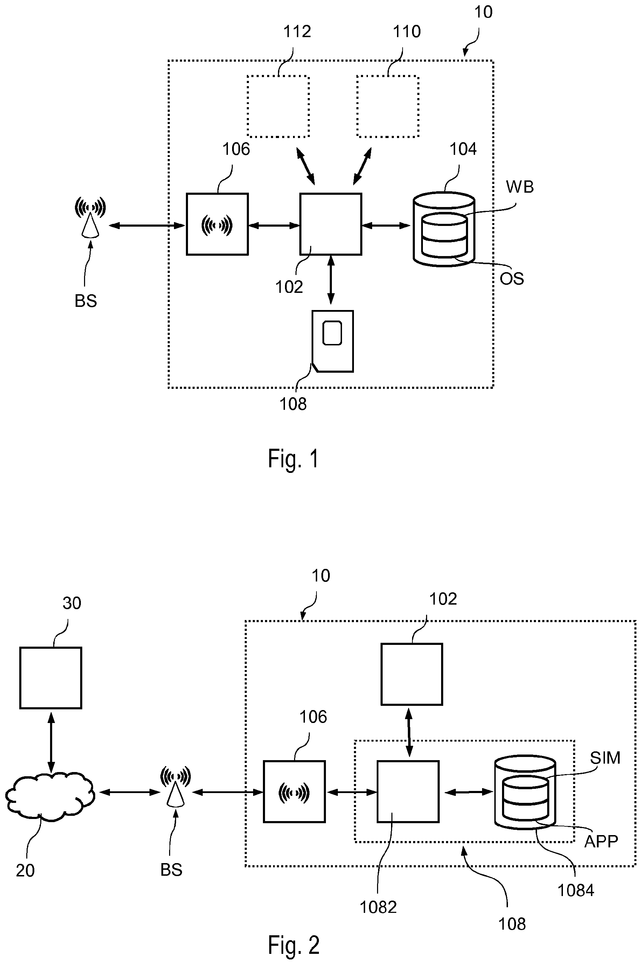

Figure 1 shows a possible architecture of a "*user equipment*" 10, such as a mobile device, *e.g.* a smartphone or a tablet, or a mobile communication module usually to be used in embedded systems.

Generally, the device 10 comprises one or more processors 102 connected to one or more memories 104. The device 10 comprises moreover at least one mobile communication interface 106 for communication with a base station BS.

For example, the mobile communication interface 106 may comprise a GSM (Global System for Mobile Communications), CDMA (Code Division Multiple Access) transceiver, W-CDMA (Wideband Code Division Multiple Access), UMTS (Universal Mobile Telecommunications System), HSPA (High-Speed Packet Access) and/or LTE (Long Term Evolution) transceiver.

A mobile device comprises often also a user interface 110, such as a touchscreen. Conversely, a communication module to be used, e.g., in embedded systems, such as alarm systems, gas meters or other types of remote monitoring and/or control systems, often does not comprise a user interface 110, but a communication interface 112 in order to exchange data with a further processing unit of an embedded system. For example, in this case, the interface 112 may be a digital communication interface, such as a UART (Universal Asynchronous Receiver-Transmitter), SPI (Serial Peripheral Interface) and/or USB (Universal Serial Bus) communication interface. Generally, the processing unit 102 may also be directly the main processor of an embedded system. In this case the interface 112 may be used to exchange data with one or more sensors and/or actuators. For example, in this case, the interface 112 may be implemented by means of one or more analog interfaces and/or digital input/output ports of the processing unit 102.

In the memory 104 may be stored *e.g*. an operating system OS being executed by the processor 102 and which manages the general functions of the device 10, such as the management of the user interface 110 and/or the communication interface 112 and the establishment of a connection to the base station BS via the interface 106. The memory 104 may also contain applications being executed by the operating system OS. For example, in the case of a mobile device, the memory 104 often comprises a web browser application WB.

For establishing a connection with the base station BS, the device 10 is coupled to a processing unit 108 configured to manage the identity identification of the user. For example, usually a mobile device comprises a card holder for receiving a card comprising a Subscriber Identity Module (SIM), which is usually called SIM card. Generally a corresponding SIM module may also be installed directly within the device 10. For example, nowadays is often used a Universal Integrated Circuit Card (UICC) 108, which is a smart card often used in GSM and UMTS networks. The UICC ensures the integrity and security of all kinds of personal data and typically holds a few hundred kilobytes. Also a UICC may be integrated directly in the device 10 and is in this case often called embedded UICC (eUICC).

For example, in a GSM network, the UICC 108 contains a SIM application and in a UMTS network a USIM application. A UICC may contain several applications, making it possible for the same smart card to give access to both GSM and UMTS networks, and may also provide storage of a phone book and other applications.

Accordingly, the reference to a SIM module in the following of the present description is intended to include both 2G and/or 3G SIM modules and applies also the case in which such a SIM module is provided on a SIM card.

As shown in Figure 2, a SIM module 108 often comprises one and more processors 1082 and one or more memories 1084 for executing applications stored in the memory 1084 of the module 108.

For example, the SIM module 108 may comprises in addition to the Subscriber Identity Module application (reference sign SIM in Figure 2) at least one further application APP. For example, this application APP may be configured to communicate (directly, or indirectly via the processor 102 and possibly the operating system OS) with the mobile communication interface 106 in order to send data to and/or receive data from a remote host 30.

For this purpose, the host 30 may be connected via a network 20, such as a Local Area Network (LAN) or a Wide Area Network (WAN), such as the internet, to the base station BS. Accordingly, connection between the host 30 and the UICC 108 may be established by means of the network 20, the base station BS and the communication interface 108.

Generally, the communication may be initiated by the host 30 or the UICC 108.

For example, the application APP may be a web server application, which receives requests from the web browser WB of a mobile device 10 and obtains respective content from a remote host 30, such as a web server.

The application APP may also be an authentication application. In this case, the host 30 may send an authentication request to the UICC 108 and the UICC 108 may send an authentication response to the host 30.

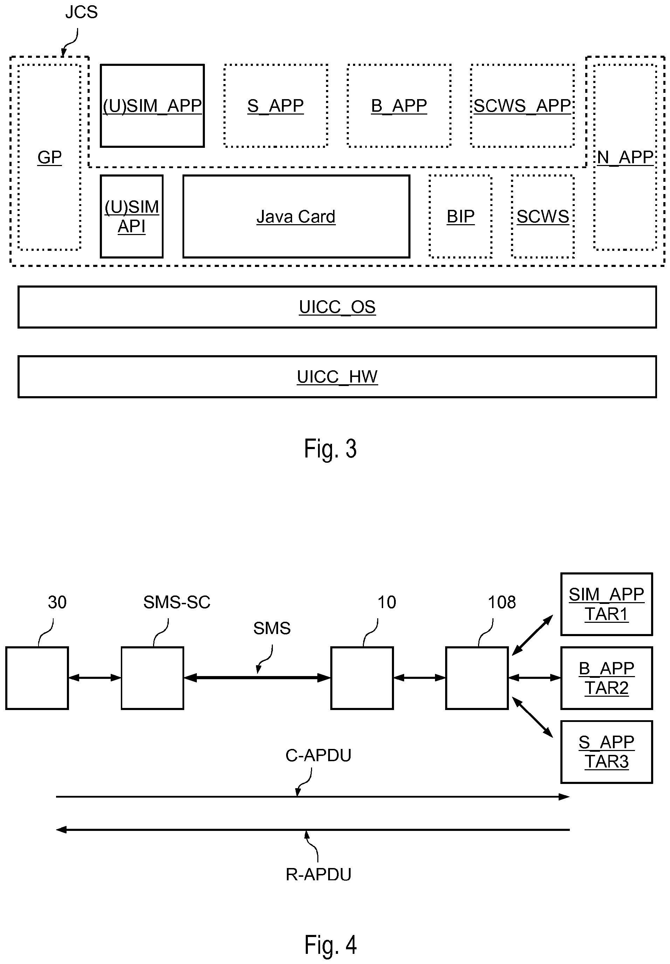

Figure 3 shows in this respect a typical architecture of the software layers of a UICC card.

Substantially, a UICC 108 comprises a hardware layer UICC_HW being represented (at least) by the processor 1082 and the memory 1084. On top of the hardware layer UICC_HW runs an operating system UICC_OS of the UICC card.

Generally, the operating system UICC_OS may manage a plurality of applications.

For example, in the example considered, a Java Card System JCS is executed by the operating system UICC_OS, which manages and runs applets, *i.e*. applications using the APIs (Application Programming Interface) provided by the Java Card System JCS.

For example, the Java Card System JCS comprises usually a SIM and/or USIM API (identified with the reference sign (U)SIM API) which manages the basic Subscriber Identity Module commands and provides functions to higher level SIM or USIM applets (identified with the reference sign (U)SIM_APP).

Generally, the communication with the remote host 30 may be performed via short messages of the Short Message Service (SMS) and/or by means of a Bearer Independent Protocol (BIP), such as GPRS, EDGE, or UMTS. Accordingly, often the Java Card System JCS comprises a Bearer Independent Protocol API BIP.

The Java Card™ Platform provides a JAVA™ runtime environment, which is particularly optimized for smart cards. This technology is well known to those skilled in the art, rendering a more detailed description herein superfluous.

Often the Java Card System JCS comprises a GlobalPlatform module GP according to the *"GlobalPlatform Card specification", e.g.* version 2.2.1. Also this standard is well known to those skilled in the art, rendering a more detailed description herein superfluous. Basically, the GP module provides features such as user authentication through secure channels, or the installation and remote management of the applets. For example, one of the possible encryption mechanisms managed by the GP module may be the SCP (Secure Channel Protocol) 80 specified in the technical specification ETSI TS 102 225 "*Smart Cards; Secured packet structure for UICC based applications*"*, e.g.* version 9.0.0.

The above mentioned API functions may then be used by applets, such as the SIM or USIM applet (U)SIM_APP, a basic applet B_APP and/or a secure applet S_APP.

The UICC 108 may comprise also further applications, such as a Smart Card Web Server SCWS and possible Web server applets SCWS_APP, which e.g. perform the above mentioned web server function.

Generally, the UICC 108 may comprise not only custom applets but also native low level applications N_APP being executed directly by the operating system UICC_OS.

For example, Figure 4 shows a typical communication by using the remote management protocol, such as the SCP 80 protocol as specified in the technical specifications ETSI TS 102 225 "*Smart Cards; Secured packet structure for UICC based applications",* e.g. version 9.0.0, and in particular in ETSI TS 102 226 "*Smart Cards; Remote APDU structure for UICC based applications*", *e.g.* version 9.2.0.

In the example considered, the remote host 30 may send a command, *i.e*. a Command Application Protocol Data Unit C-APDU, to an application installed on the UICC 108 and receive from the application a respective response, *i.e.* a Response Application Protocol Data Unit R-APDU.

For example, the host 30 may send the command C-APDU to a Short Message Service - Service Centre SMS-SC, which sends a short message to the device 10. The Short Message Service - Service Centre SMS-SC, may also encrypt the command C-APDU, *e.g.* by using the SCP80 protocol, and encapsulates the encrypted content in a SMS message, which is then transmitted by means of the base station BS to the device 10. The device 10 may recognize that the short message message contains a remote management message, *e.g*. a SCP80 packet, and send the latter to the UICC 108 by means of a so called ENVELOPE. The UICC 108, possibly by using the functions provided by the operating system UICC_OS and the Java Card System JCS, determines the content of the SMS message, *e.g*. if required the UICC may decrypt the message, and forwards the content C-APDU to the target application.

In order to forward the C-APDU, the UICC 108 should be able to identify the corresponding target application. For this purpose, usually a TAR (Toolkit Application Reference) code, consisting *e.g*. of 3 bytes, is associated with each applications installed in the UICC. For example, in Figure 4 a code TAR1 is associated with the SIM application SIM_APP, a code TAR2 is associated with the application B APP and a code TAR3 is associated with the secure application S_APP.

Accordingly, it is sufficient to include the TAR code of the target application in the short message sent to the UICC 108, *e.g*. in the short message header or the SCP80 packet, and the UICC has only to compare the TAR code received with the various TAR codes of the applications installed in the UICC.

Generally, instead of using short messages, any other communication could be used for exchanging remote management messages with a SIM module 108, such as a communication based on the IP protocol, *e.g*. the TCP (Transmission Control Protocol) or UDP (User Datagram Protocol) protocol.

For example, the above remote management communications may be used in order to update the *Preferred Roaming List* (PRL), *i.e*. the list and priority of roaming partners, which may be stored directly within the memory of the UICC 108.

In this case, the UICC may comprise an application which manages the Preferred Roaming List and the remote host may send one or more C-APDU with the updated roaming information and the TAR code of the application to the UICC 108.

US2013/023309 may be of interest for the present application.

### Summary

The inventor has observed that the above described identification of the applications with TAR codes may create problems in case the SIM modules support a plurality of different mobile phone operators, *i.e*. so called multi-subscription SIM modules. In fact, the TAR codes are assigned by each mobile network operator and accordingly it is not guaranteed that the applications have assigned univocal TAR codes.

On the basis of the foregoing description, the need is felt for solutions which overcome one or more of the previously outlined drawbacks.

According to one or more embodiments, such an More specifically, the present invention relates to a method for performing a remote management of a multi-subscription SIM module. In this respect documents US 2011/217997 A1, US 2013/023235 A1 and object is achieved through methods having the features specifically set forth in the claims that follow. Embodiments moreover concerns a related SIM module as well as a corresponding related computer program product, loadable in the memory of at least one computer and including software code portions for performing the steps of the method when the product is run on a computer. As used herein, reference to such a computer program product is intended to be equivalent to reference to a computer-readable medium containing instructions for controlling a computer system to coordinate the performance of the method. Reference to "at least one computer" is evidently intended to highlight the possibility for the present disclosure to be implemented in a distributed/modular fashion.

The claims are an integral part of the technical teaching of the disclosure provided herein.

As mentioned in the foregoing, the present disclosure provides solutions for performing a remote management of a multi-subscription SIM module. Such multi-subscription SIM module may comprise at least a first and a second profile associated with a respective first and a second mobile network operator. For example, each profile may have associated a respective memory area containing a respective content. For example, this content may be represented by one or more applications, such as a Subscriber Identity Module application and/or an authentication application. Another example would be the authentication data used by the SIM module to access the mobile networks of the mobile network operators. In some embodiments, also the Over The Air (OTA) key may be stored in the profile. In this way, also the key used to decrypt the remote management message may be updated. Generally, the SIM module may provide also access to respective file systems for storing files, *e.g*. in order to modify files, install or update applications, etc. Generally, as will be described in the following, the SIM module may only comprise a memory in which a plurality of profiles may be stored. In fact, a profile could be created and/or the respective content of the profile could be loaded in the memory of the SIM module also later, *e.g*. after installation in a mobile device, *e.g*. by means of remote management commands which are elaborated by the SIM module.

In various embodiments, the SIM module establishes a connecting to the mobile networks of the first and/or second mobile network operator.

For example, in case both connections are enabled, each mobile network operator may send remote management commands through the respective connection. For example, such a remote management message may comprise a remote management command, and a sender address and/or the destination address.

Conversely, in some embodiments, *e.g*. in case the second connection is disable (or not reachable), a remote management command for the second profile may be transmitted to the SIM module through the connection with the first mobile network operator.

For example, the first mobile network may provide a gateway server for this purpose. In this case, the gateway server may receive the remote management command from a host associate with the mobile network of the second mobile network operator and send the remote management command to the SIM module through the connection between said SIM module and the mobile network of said first mobile network operator.

For example, a first phone number may be associated with the first profile and/or a second phone number may be associated with the second profile. In this case, the remote management messages may be sent in the form of short messages.

Similarly, a first IP address may be associated with the first profile and/or a second IP address may be associated with the second profile. In this case, the remote management messages may be sent in the form of IP packets.

Accordingly, generally, the SIM module may receive a remote management message through the connection with the first and/or second mobile network operator.

In some embodiments, the SIM module elaborates the remote management message in order to determine the sender address and/or said destination address.

In some embodiments, the target profile of the remote management command is then determined as a function of the sender address and/or the destination address, and the remote management command may be executing in order to interact with the content of the target profile, e.g. communicate with an application in the target profile, or modify the profile's content.

For example, in case of short messages, the SIM module may determine the target profile of the remote management command as a function of the sender phone number and/or the destination phone number. Conversely, in the case of IP packets, the SIM module may determine the target profile of the remote management command as a function of the sender and/or destination IP address.

For example, as will be described in the following, in case the SIM module is connected to both networks, the destination address may be sufficient in order to determine the target profile. Conversely, e.g. in case the packets of the second mobile network operator are transmitted through the connection with the first operator, the SIM module may determine the target profile of the remote management command as a function of the sender address.

In some embodiments, the SIM module may open a first socket connection for the first profile and a second socket connection for said second profile (independently from the fact whether the SIM module is connected to the first and/or the second mobile network). In this case, the SIM module may receive the remote management message from a remote host in the form of IP packets, which are transmitted through the first or the second socket connection. Accordingly, in this case, the socket may be used to identify the target profile.

In some embodiments, the SIM module may also perform a request to a first URL for the first profile and/or a request to a second URL for said second profile. Accordingly, in this case, the SIM module may receive a remote management message from in response to a request to said first or second URL. In this embodiment, the SIM module may determine the target profile as a function of the URL.

### Brief description of the figures

Embodiments of the present disclosure will now be described with reference to the annexed drawings, which are provided purely by way of non-limiting example and in which:
- Figures 1 to 4 have already been described in the foregoing;
- Figure 5 shows an embodiment of the software architecture of a multi-subscription SIM module containing a plurality of profiles;
- Figure 6 shows an embodiment for enabling a profile by means of a mobile device;
- Figures 7 and 8 show an embodiment for enabling a profile by means of remote management commands; and
- Figures 9 to 14 show various embodiments of solutions for performing a remote management of the content of the profiles of a multi-subscription SIM module.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

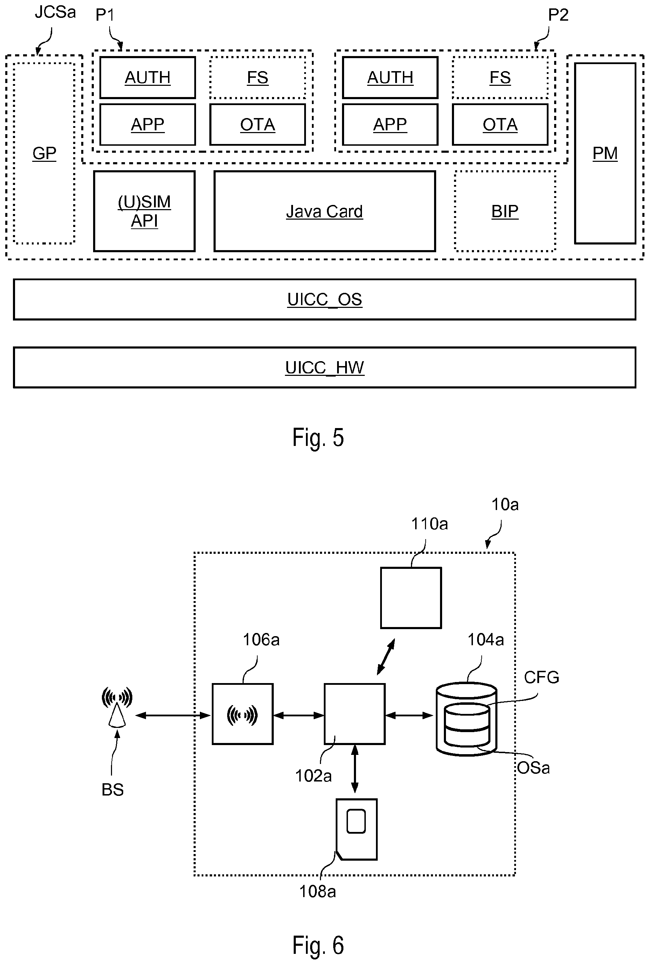

In the following Figures 5 to 14 parts, elements or components which have already been described with reference to Figures 1 to 4 are denoted by the same references previously used in such Figures; the description of such previously described elements will not be repeated in the following in order not to overburden the present detailed description.

As mentioned in the foregoing, the present disclosure provides solutions for performing a remote management of a SIM module having installed applications provided by different mobile phone operators, *i.e.* a so called multi subscription SIM, *e.g.* a multi-subscription UICC. For example, such multi-subscription SIM modules may be used as embedded SIM modules, *e.g.* eUICC, or as SIM cards to be installed in automated machines, which often are not easily reachable, such as remote monitoring and/or control systems, such as a gas meters.

Figure 5 shows an embodiment of a multi-subscription SIM module 108a.

In the embodiment considered, the SIM module 108a supports at least two profiles P1 and P2 of two mobile network operators.

For example, in the embodiments considered, the software architecture is based on the Java Card System described with respect to Figure 3. For example, also in this case, a Java Card System JCSa is executed by an operating system UICC_OS, which manages and runs applets, *i.e*. applications using the APIs (Application Programming Interface) provided by the Java Card System JCSa. For example, the Java Card System JCS may comprise a SIM and/or USIM API (identified with the reference sign (U)SIM API) which manages the basic Subscriber Identity Module commands and provides functions to higher level SIM and/or USIM applets. The Java Card System JCSa may also support a Bearer Independent Protocol (BIP), such as GPRS, EDGE, or UMTS, by means of a Bearer Independent Protocol API. Moreover, the Java Card™ Platform may provide a JAVA™ runtime environment. In an embodiment, the Java Card System JCSa may also comprises a GlobalPlatform module GP according to the *"GlobalPlatform Card specification", e.g.* version 2.2.1. The above mentioned API functions may then be used by the applets, such as the SIM and/or USIM applet (U)SIM_APP, a basic applet B_APP and/or a secure applet S_APP.

In an embodiment, each profile P1/P2 is represented by a memory area in the SIM card for storing applets APP, such as a respective (U)SIM_APP applet for each profile P1/P2. In the memory area may also be stored the respective authentication data AUTH of the SIM card used to access the mobile network of the mobile network operator. In various embodiments, each profile P1/P2 may also have associated a respective Over The Air (OTA) Key, which are usually used to encrypt (*e.g*. according to the SCP80 protocol) the remote management commands sent by a mobile network operator to a given SIM card. Usually, while the authentication data AUTH are SIM specific, often a single OTA key is used by a given mobile network operator.

In various embodiments, each profile P1/P2 may have associated a respective file system area FS, *e.g.* in order to store new applets APP and/or for storing user data, such as the user's contact list, or the above mentioned preferred roaming partner list.

Generally, while the profile data have been shown in the applet/application layer, each profile may also comprise applications and/or API in the Java Card System JCSa. Moreover, the profile data may also include configuration data which influence directly the API layer.

In the embodiment considered, the UICC 108a comprises moreover a profile manager application PM. For example, in the embodiments considered, this profile manager PM is provided in the API layer. However, the profile manager PM may also be at the applet layer, or be distributed between the API and the applet layers.

Figure 6 shows in this respect a possible embodiment of a device 10a, such as a mobile device or a mobile communication module, having (pre)installed the above described multi-subscription SIM module 108a, *e.g*. in the form of an embedded SIM module, *e.g*. a eUICC.

In the embodiment considered, similar to what has already been described with respect to Figure 1, the device 10a may comprise one or more processors 102a connected to one or more memories 104a. The device 10a comprises moreover at least one mobile communication interface 106a for communication with a base station BS. For example, the mobile communication interface 106a may comprise a GSM (Global System for Mobile Communications), CDMA (Code Division Multiple Access) transceiver, W-CDMA (Wideband Code Division Multiple Access), UMTS (Universal Mobile Telecommunications System), HSPA (High-Speed Packet Access) and/or LTE (Long Term Evolution) transceiver. The device 10a may comprise also a user interface 110a, such as a touchscreen.

In the embodiment considered, in the memory 104a is stored an operating system OSa being executed by the processor 102a and which manages the general functions of the device 10a, such as the management of the user interface 110a the establishment of a connection to a base station BS via the interface 106a.

In the embodiment considered, the memory 104a contains also an application CFG configured for communicating with the profile manager PM of the SIM module 108a in order to manage the profiles installed in the SIM module 108a. For example, in some embodiments, the application CFG is configured for communicating with the profile manager PM in order to select or enable one of the profiles P1/P2 installed in the SIM card 108a.

For example, in an embodiment, the SIM module 108a may have preinstalled the profiles of a plurality of mobile network operators and when the device 10a is started for the first time (or generally during a configuration phase), the user may activate by means of the application CFG one of the profiles P1/P2.

In some embodiments, the application CFG may be configured to install and/or update a profile in the SIM module 108a. For example, the application CFG may access a remote host in order to download a list of mobile network operators. Next the application CFG may be used to subscribe to one of the mobile network operators and obtain the respective profile data, which may then be loaded on the SIM module 108 by means of the application CFG and the profile manager PM.

Generally, also a plurality of profiles could be activated contemporaneously on the same SIM module 108a.

For example, a given user could active during the configuration phase a plurality of profiles of different mobile network operators. In this case, the application CFG could also be used to select "on the fly" which of the activated profiles should be enabled. Accordingly, in this case, only a single profile could be enabled and the other profiles would be disabled.

However, generally, similar to a multi-SIM, e.g. dual-SIM, mobile device, also a plurality of activated profiles could be enabled contemporaneously. In this case, the mobile communication interface 106a may have to be modified in order to permit a contemporaneous connection to a plurality of base stations. Generally, also a modification of the operating system OSa may be sufficient, e.g. in case the profiles belong to the same mobile network operator, and the profiles are used e.g. to distinguish between a work and a private profile.

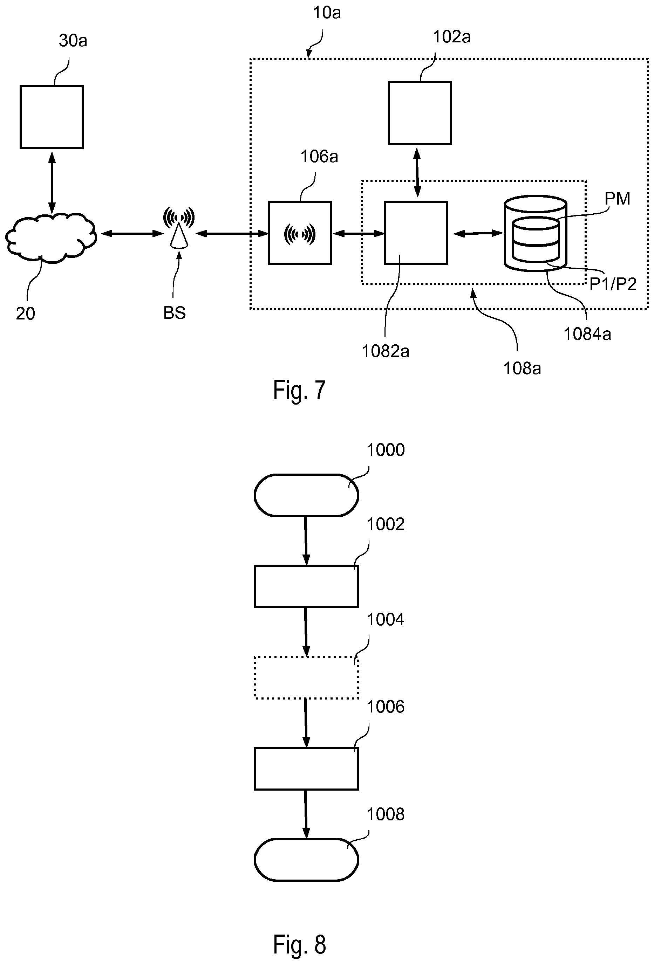

Figure 7 shows an embodiment, in which the profile manager PM may communicate with a remote host 30a in order to install, update and/or enable a profile P1/P2 by means of remote management commands.

Again, the SIM module 108a comprises one and more processors 1082a and one or more memories 1084a for executing applications stored in the memory 1084a of the module 108a. In this case, the profile manager application PM may be configured to communicate (directly, or indirectly via the processor 102a and possibly the operating system OSa) with the communication interface 106a in order to send data to and/or receive data from the remote host 30a.

For example, the host 30a may be connected via a network 20, such as a Local Area Network (LAN) or a Wide Area Network (WAN), such as the internet, to the base station BS. Accordingly, connection between the host 30a and the SIM module 108a may be established by means of the network 20, the base station BS and the communication interface 106a.

For example, Figure 8 shows a flow chart of a possible method which permits to enable a profile in the SIM module 108a. Specifically, in the embodiment considered, the SIM module 108a has installed at least a first profile P1.

After a start step 1000, the device 10a connects in a step 1002 to a base station BS by using the profile data P1, e.g. by using the authentication data AUTH of the profile P1.

Next, in a step 1004, the host 30a sends one or more remote management commands to the profile manager PM in order to install or update a new profile P2.

Once the new profile P2 has been installed or updated, the host 30a sends in a step 1006 a remote management command to the profile manager PM in order to enable the profile P2.

Finally, the method ends at a stop step 1008.

Generally, the step 1004 is purely optional, because the SIM module 108a could already contain the second profile P2. In this case the host 30a could directly send a remote management command to the profile manager PM in order to enable the profile P2.

For example, this embodiment may be suitable for automated systems, such as gas meters or any other type of remote monitoring and/or control systems. In this case, the application CFG may also not be required. However, the method could also be used for mobile devices, such as smart-phones or tablets.

Generally, the embodiments described with respect to Figure 6 and Figures 7 and 8 could also be combined, e.g. the a SIM module 108a could be configured such that a profile may be installed, updated and/or enabled by means of an application installed in the device 10a and/or by means of a remote management command received from a remote host 30a.

Accordingly, independently of the method used to install, update and/or enable profiles, a multi-subscription SIM module 108a may comprises a plurality of profiles, wherein each profile may comprise respective applications and possible other content. Moreover, as mentioned in the foregoing, each application is usually identified by means of a TAR code in order to permit a remote management of the respective application.

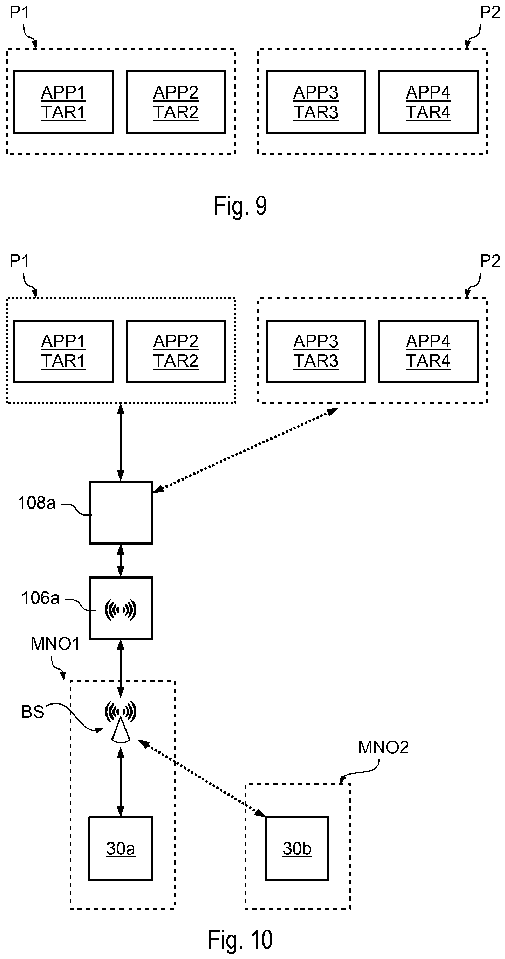

For example, Figure 9 shows an example, in which the SIM module 108a comprises two profiles P1 and P2, wherein two applications APP1 and APP2 are installed in the first profile P1, and two applications APP3 and APP4 are installed in the second profile P2. Moreover, each application is identified with a respective TAR code TAR1, TAR2, TAR3 and TAR4.

As mentioned in the foregoing, the TAR codes are managed independently by each mobile network operator, and accordingly it is also possible that the same TAR code is used for different applications in different profiles. For example, the TAR code TAR2 of the application APP2 of the first profile P1 may be the same as the TAR code TAR4 of the application APP4 of the second profile P2.

A rather straight forward solution would be to enable only a single profile. In this case, either the application APP2 or the application APP4 may be enabled and respond to remote management commands. However, from a practical point of view, this implies that a mobile network operator may not be able to perform a remote management of a disabled profile.

For example, Figure 10 shows an embodiment in which the profile P1 is enabled. Accordingly, in this case, the SIM module 108a uses the profile P1 in order to connect to the base station BS of the respective mobile network operator MNO1 and remote management commands may be received only from a remote host 30a being associated with the mobile network operator MNO1.

Accordingly, in this case, access to the disabled profile P2 by means of a second host 30b being associated with the mobile network operator MNO2 of the profile P2 would not be possible.

However, the inventor has observed that it would be useful to permit such an access to the applications belonging to profiles which are currently not enabled by using the communication through the base station BS of the mobile network operator MNO1.

For example, this might be useful in order to install a new profile and/or enable a disabled profile as disclosed e.g. with respect to Figure 8.

This procedure may be used to update the preferred roaming list of a profile, even though this profile is not enabled. For example, this may be useful, in case the user has activated a plurality of profiles, wherein one of the profiles, e.g. the profile P2, is used only sporadically. In this case, the mobile network operator MNO2 would have to wait that the user enables this profile in order to update the preferred roaming list. For example, currently this type of operation is performed often by means of a Remote File Management protocol of specific files depending on the access technology (2G, 3G, CDMA), such as the "*Forbidden PLMN*" file or the "*Preferred PLMN*" file.

Similar problems relate also to updates of applets in a profile *e.g*. due to evolutions, bug fixing, security improvements. For example, currently this type of operation is performed often by means of a Remote Applet Management protocol.

Moreover, in case an authentication application is installed in one of the profiles, *e.g*. application APP4 of profile P2, such as an authentication application for a bank account, the user could not use this application when the corresponding profile P2 is disabled. Examples of such applications could be *e.g*. Mobile Connect, payment services, password storage, etc.

Accordingly, several embodiments disclosed herein relate to solutions, which permit that remote management commands may be used to install a profile and/or manage the content of a disabled profile of a multi-subscription SIM module 108a.

For example, in some embodiments the remote management commands may be sent by means of short messages of the SMS protocol and/or IP data packets.

Accordingly, in order to correctly forward the remote management commands, the SIM module 108 has to be able to determine in some way the target profile to which a given command is addressed.

Generally, this could be obtained by including an additional field in the remote management command which specifies also the target profile.

Conversely, according to several embodiments disclosed herein, the SIM module 108a analysis the already existing fields in conventional remote management commands in order to determine the corresponding target profile.

In fact, the inventor has observed that remote management commands already include information which permits to univocally identify the sender and/or destination of the communication.

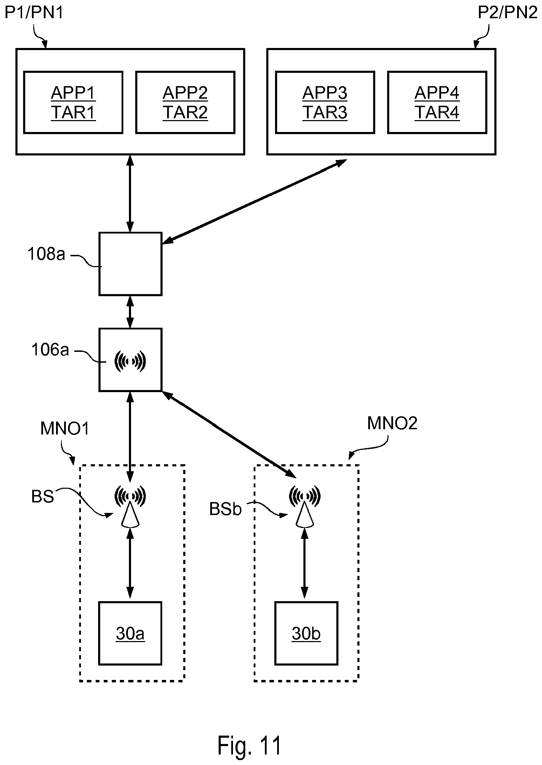

For example, Figure 11 shows an embodiment, wherein at least one remote management command is sent to the SIM module 108a by means of short messages.

For example, in the embodiment considered, the SIM module 108a supports again at least two profiles P1 and P2, wherein, when the profile P1 is enabled, the SIM module 108a is adapted to be connected via the device 10a, in particular the communication interface 106a, to the network of a first mobile network operator MNO1, wherein a given phone number PN1 is associated with the SIM module 108a. Similarly, when the profile P2 is enabled, the SIM module 108a is adapted to be connected via the device 10a/communication interface 106a to the network of a second mobile network operator MNO2, wherein a given second phone number PN2 is associated with the SIM module 108a.

As mentioned in the foregoing, generally, a plurality of profiles could also be enabled in case the device 10a supports this kind of operation.

For example, in the embodiment considered, both profiles P1 and P2 are enabled and the device 10a is connected via the communication interface 106a to a base station BS of the first mobile network operator MNO1 and a second base station BSb of the second mobile network operator MNO2.

In this case, the host 30a associated with the network of the mobile network operator MNO1 may perform a remote management of the profile P1 by sending short messages to the phone number PN1, and the host 30b associated with the network of the mobile network operator MNO2 may perform a remote management of the profile P2 by sending short messages to the phone number PN2.

Accordingly, in an embodiment, the SIM module 108a is configured to analyze the destination phone number of the short message in order to determine whether a remote management command is for the profile P1 or P2, e.g. forward the remote management command to the profile P1 when the destination phone number of the short message corresponds to the phone number PN1 and forward the remote management command to the profile P2 when the destination phone number corresponds to the phone number PN2.

Conversely, in this architecture, when the profile P2 is disabled, the device 10a and the SIM module 108a are not reachable with the second phone number PN2 and accordingly it would be impossible to send a short message to the phone number PN2 in order to perform a remote management of the profile P2 via short messages.

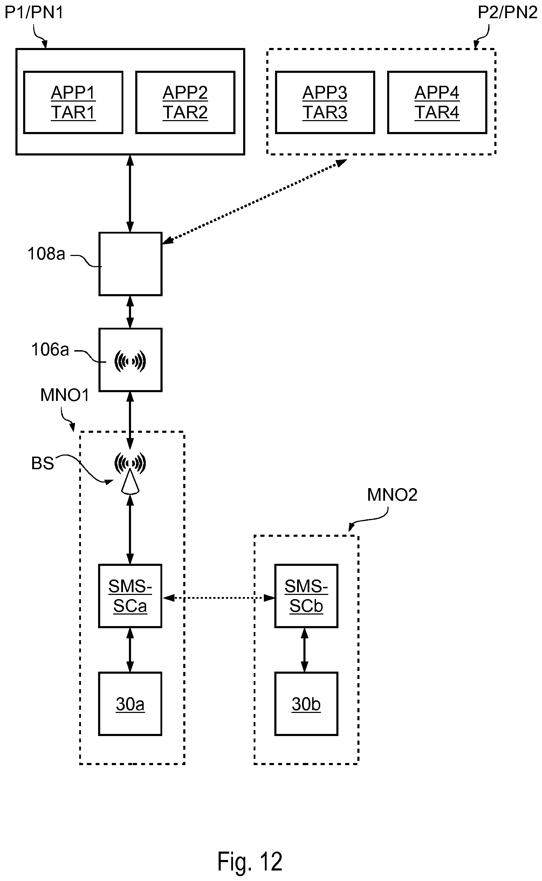

Figure 12 shows an embodiment, which is based on the fact that when at least one profile is enabled, e.g. when the profile P1 is enabled, a remote management command may be sent to the disabled profiles by sending short messages to one of the enabled phone number, e.g. the phone number PN1.

Accordingly, in the embodiment considered, the host 30b associated with the network of the mobile network operator MNO2 may perform a remote management of the profile P2 by sending short messages to the phone number PN1, i.e. the phone number of the profile P1.

However, for this purpose, the mobile network operator MNO2 should be able to obtain the phone number PN1 or generally at least one of the enabled phone numbers.

For example, the profile manager PM may determine or manage a list of phone numbers, which are associated with the various profiles activated in a given SIM module 108a, *e.g*. the numbers PN1 and PN2. Accordingly, each mobile network operator could download this list, while the SIM module 108a is connected to its network, *e.g*. the operator MNO1 could download the list while the profile P1 is enabled and the operator MNO2 could download this list while the profile P2 is enabled.

In some embodiments, the mobile network operators may manage a centralized database of phone numbers being associated with a given SIM module 108a. Accordingly, in this case, each mobile network operator MNO1/MNO2 could send a request to this database in order to obtain possible other phone numbers being associated with a given SIM mobile 108a. Generally, this database could also return only the phone numbers which result enabled.

Accordingly, once having obtained the above list of phone numbers, the mobile network operator MNO2 may also send remote management commands to the SIM module 108a by sending short messages to the phone number PN1 associated with the profile P1, or generally a phone number of an enabled profile.

For example, in the embodiment considered are shown a first and a second Short Message Service - Service Centre SMS-SCa and SMS-SCb, which belong to the mobile network operators MNO1 and MNO2, respectively. Accordingly, the host 30a associated with the mobile network operator MNO1 may send a short message to the SIM module 108a via the centre SMS-SCa, and the host 30b associated with the mobile network operator MNO2 may send a short message to the SIM module 108a via the centre SMS-SCb.

As mentioned in the foregoing, in this case the TAR code is not sufficient in order to identify univocally a given target application.

However, a short message contains also the phone number of the sender having sent the short message, such as the phone number of the SMS service center SMS-SCa or SMS_SCb, or any other phone number specified by the hosts 30a or 30b.

Accordingly, by analyzing the sender's phone number in the short message, the SIM module 108a may determine, *e.g*. by means of a look-up table (LUT), whether a given short message has been sent by the operator MNO1 or the operator MNO2. For example, the mentioned LUT could be managed by the profile manager and/or within each profile P1/P2. Moreover the respective LUT could also be updated by means of remote management commands send by the operators MNO1/MNO2, *e.g*. similar to a conventional update of the list of preferred roaming partners.

Accordingly, once have determined whether a given short message has been sent from the network of the operator MNO1 or the operator MNO2, the SIM module 108a may forward the remote management command to the corresponding profile, *e.g*. forward a command sent by the operator MNO1 to the profile P1 and a command sent by operator MNO2 to the profile P2.

For example, in this way, the mobile network operator MNO2 may update the preferred list of roaming partners in the profile P2, by sending one or more short messages to the phone number PN1, *e.g*. containing Remote File Management commands or any other suitable remote management command. These remote management commands may then be used to control the content of the profile P2 in a manner *per se* known in the contest of OTA remote management messages.

Similarly, the mobile network operator MNO2 may communicate with the applications in the profile P2, *e.g*. send authentication requests to an authentication application and obtain the corresponding authentication response from the application. For example, in this case, the mobile network operator may include again the TAR code of the authentication application in the short message and the corresponding response message will also be sent through the base station of the first mobile network operator MNO1.

Accordingly, in the above embodiment, the SIM module 108a may use the sender phone number in order to determine to which profile a given remote management command should be forwarded.

In some embodiments, the routing through the phone number PN1 may also be performed transparent for the host 30b. For example, the host 30b may send a remote management commands to the center SMS-SCb indicating the phone number PN2. The center SMS-SCb may then verify whether the phone number is enabled and in case the phone number PN2 results disabled, the center SMS-SCb may use the above method in order to send the remote management command to the phone number PN1.

Generally, if the network operators MNO1 support such type of routing, the destination phone number in the final short message sent to the device 10a may also remain the initial phone number PN2. Accordingly, in this case, the SIM module 108a may still use the destination phone number in order to determine the target profile to which a given remote management command should be forwarded.

Generally, the above procedures may also be used when a profile is enabled but the corresponding phone number is not reachable, *e.g*. because the device is in an area without sufficient signal power from a base station of the corresponding network operator. Accordingly the terms enabled or disabled are intended to include also the possibility that the SIM module 108a is connected or disconnected by means of the respective profile.

Accordingly, in the above embodiments, the SIM module 108a may receive a remote management message from a remote host 30a or 30b, wherein the remote management message comprises a remote management command, and a sender address and/or a destination address. Next, the SIM module 108a may elaborate the remote management message in order to determine the sender address and/or the destination address, which may be used to determine the target profile of the remote management command, and the remote management command may be executed in order to interact with the content of the target profile, *e.g*. interact with one of the applications APP, modify the authentication data AUTH or the OTA key, install or modify a new file, etc.

For example, *e.g*. in case both profiles are enabled the destination phone number of the short message may be used to determine the target profile. For example, the SIM module 108a may set the target profile to the first profile P1, when the destination phone number corresponds to the first phone number.

Conversely, *e.g*. in case one of the profiles is disabled, the sender phone number of the short message may be used to determine the target profile. For example, the SIM module 108a may determine whether the sender phone number is associated with the mobile network of the first or the second mobile network operator and, *e.g*., set the target profile to the first profile, when the sender phone number is associated with the mobile network of the first mobile network operator.

The above described solutions may also be applied in case the remote management commands are sent via the IP protocol.

For example, also in this case a code is usually associated with each application to be managed by means of remote management commands sent over IP. For example, in the *"Remote applet management over HTTPs"* as specified in the GlobalPlatform specification 2.2, Amendment B), the corresponding code would be the AID (Application ID).

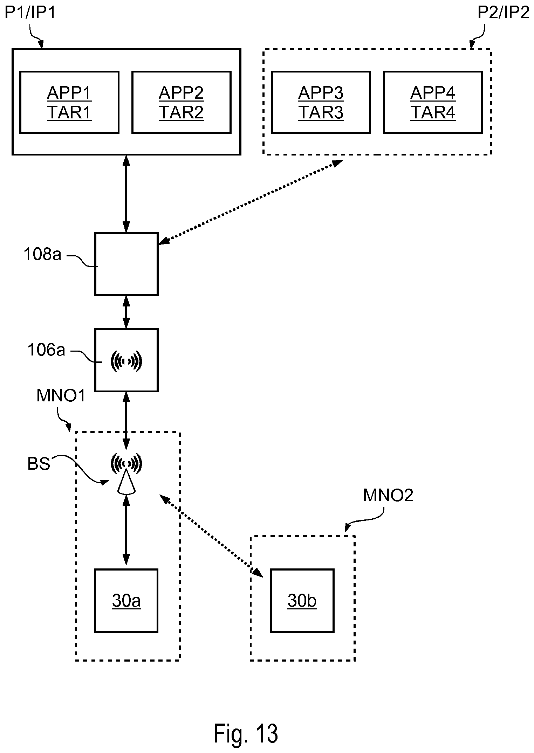

For example, Figure 13 shows an embodiment, wherein again two hosts 30a and 30b may send remote management commands to the SIM module 108a containing two profiles P1 and P2.

Generally, similar to short messages, the SIM module 108a may determine the target profile of a remote management command as a function of said sender IP address and/or the destination IP address.

However, while the phone number associated with a given profile remains fixed, IP numbers are often assigned dynamically during the connection establishment. For example, when the profile P1 is enabled, the device 10a will connect to the network of the mobile network operator MNO1 receiving a first IP address IP1 from the operator MNO1, and when the profile P2 is enabled, the device 10a will connect to the network of the mobile network operator MNO2 receiving a second IP address IP2 from the operator MNO2.

Accordingly, in case the device 10 supports plural connections, i.e. several profiles may be enabled contemporaneously as shown in Figure 11, each operator MNO1/MNO2 may send remote management commands to the respective IP address of the device 10a. For example, the operator MNO1 may send remote management commands to the IP address IP1 and the operator MNO2 may send remote management commands to the IP address IP2. For example, the SIM module 108a may open for this purpose a socket connection and the traffic over this socket may be routed by the device 10a to the SIM module 108a.

In this case, the target IP address may be used in order to identify whether a given remote management commands is for the first or the second profile P1/P2. For example, a remote management command may be forwarded to the profile P1 when the target IP address is the address IP1 and the remote management command may be forwarded to the profile P2 when the target IP address is the address IP2.

Conversely, in case a given profile is disabled, the corresponding remote management commands may be routed again though the connection established by means of one of the enabled profiles, *e.g*. the connection of the mobile network operator MNO1 may be used for the remote management commands sent by the operator MNO2.

Generally, in case the IP addresses are public, similar to the use of short messages, the operator MNO2 may determine the IP address of the device 10a, *i.e*. the IP address IP1, and send directly remote management commands to the IP address IP1.

For example, again a central database may be used for this purpose in which the IP addresses assigned to a given SIM module 108a are stored. Moreover, the SIM module may send itself periodically or during the connection phase a notification to the mobile network operators (at least those which have been activated and which are currently disabled) in order to signal the current active IP address. For example, the SIM module 108a may send an IP packet to the operator MNO2 signaling the IP address IP1 assigned by the operator MNO1.

However, often such IP addresses are only private IP address, *e.g*. these addresses are often behind a Network Address Translation (NAT) firewall. In this case, the IP address IP1 may not be reached from the network of the operator MNO2.

A first solution to this problem would be the use of the above described mechanism based on short messages as fallback position.

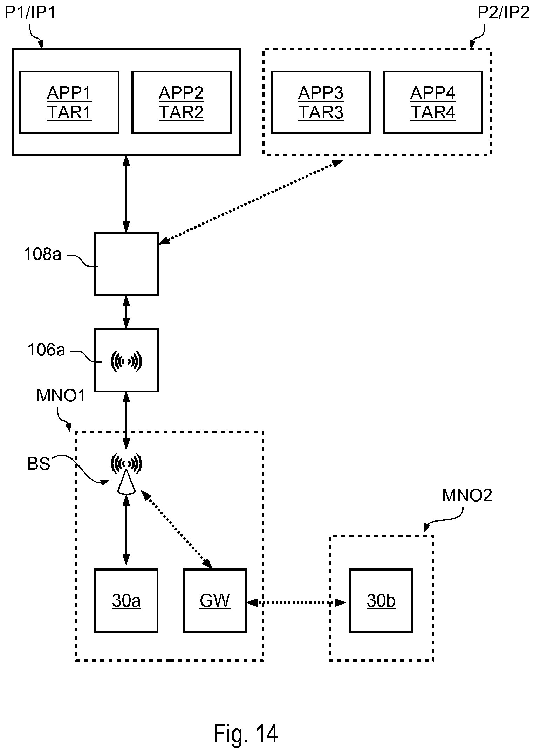

Figure 14 shows instead an embodiment, in which each mobile network operator (at least those using private IP addresses) provides a gateway server GW which permits that a different operator may send remote management commands also to private IP addresses in its network. For example, in the example considered, the operator MNO2 may send the remote management command for the profile P2 to the gateway server GW of the operator MNO1. The gateway server GW may then forward the remote management command to the private IP address IP1 of the device 10. Generally any suitable data may be used in order to identify the target SIM module 108a, such as an identifier of the SIM card 108a, the IMEA of the device 10a and/or the private IP address, *e.g*. IP1, of the SIM module 108a.

Accordingly, in the above cases, the sender IP address may be used instead of the sender phone number, *e.g*. the IP address of the host 30a or 30b, in order to distinguish between packets for the profile P1 or P2, *e.g*. the packets from the host 30a are forwarded to the profile P1 and the packets from the host 30b are forwarded to the profile P2.

As mentioned in the foregoing, in order to receive remote management commands, the SIM module 108a may open a socket connection and the traffic over this socket may be routed by the device 10a to the SIM module 108a.

Accordingly, in an embodiment, the SIM module 108a is configured to open a socket connection for each profile, *e.g*. a first connection for the profile P1 and second connection for the profile P2, even in case one of the profiles may be disabled or not reachable. Accordingly, in this case the socket number may be used (similar to the target IP address or phone number) in order to correctly route the remote management messages to the profile P1 or P2, *e.g*. the SIM module 108a may set the target profile to the first profile, when the remote management message has been received through the first socket connection established for the first profile.

Generally, the SIM module (and also the various applications itself) may also perform a polling operation to a given host in order to determine whether a remote management command is available. For example, the SIM module 108a may perform a request to the host 30a for the profile P1 and to the host 30b for the profile P2 in order to determine whether at least one remote management command is available. For example, the SIM module, *e.g*. the various applets and/or API may perform requests to different ports and/or URL addresses. Accordingly, once having received a remote management command in response to the polling request, the SIM module 108a may use the routing information of the initial request, *e.g*. the remote host address, port and/or URL, in order to determine the target profile to which a given remote management command should be forwarded. For example, the SIM module may set the target profile to the first profile, when the response IP packet is received in response to a request to a first URL, and to the second profile, when the response IP packet is received in response to a request to a second URL.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A method for performing a remote management of a multi-subscription SIM module (108a), said multi-subscription SIM module (108a) comprising at least one memory (1084a) adapted to store a first (P1) and a second (P2) profile associated with a respective first (MNO1) and a second (MNO2) mobile network operator, such that respective profile data (APP, AUTH, OTA, FS) may be associated with each profile (P1, P2), wherein said multi-subscription SIM module (108a) is an UICC or embedded UICC, the method comprising performing the following steps within said multi-subscription SIM module (108a):
- receiving a remote management message from a remote host (30a, 30b), wherein said remote management message comprises:
a) a remote management command, and
b) a sender address and/or a destination address (PN1; PN2; IP1; IP2);
- processing said remote management message in order to determine said sender address and/or said destination address (PN1; PN2; IP1; IP2);
- determining a target profile (P1; P2) of said remote management command as a function of said sender address and/or said destination address (PN1; PN2; IP1; IP2); and
- executing said remote management command in order to interact with the profile data of said target profile (P1; P2).

2. The method according to Claim 1, wherein said profile data (APP, AUTH, OTA, FS) comprise at least one of:
- one or more applications (APP), such as a Subscriber Identity Module (SIM_APP),
- authentication data (AUTH), wherein said SIM module (108a) is configured to access the mobile network of said first mobile network operator (MNO1) with the authentication data (AUTH) of said first profile (P1) and the mobile network of said second mobile network operator (MNO2) with the authentication data (AUTH) of said second profile (P2);
- an Over The Air (OTA) key, wherein said remote management message is encrypted, and wherein SIM module (108a) is configured to decrypt said remote management message with said Over The Air (OTA) key, and/or
- a file system (FS) for storing files, such as a preferred roaming list and/or applications.

3. The method according to Claim 1 or Claim 2, wherein a first phone number (PN1) is associated with said first profile (P1) and/or a second phone number (PN2) is associated with said second profile (P2), wherein said receiving a remote management message from a remote host (30a, 30b) comprises receiving a short message, said short message comprising said remote management message, a sender phone number and a destination phone number (PN1; PN2), and wherein the method comprises:
- determining said target profile (P1; P2) of said remote management command as a function of said sender phone number and/or said destination phone number (PN1; PN2) .

4. The method according to Claim 1 or Claim 2, wherein a first IP address (IP1) is associated with said first profile (P1) and/or a second IP address (IP1) is associated with said second profile (P2), wherein said receiving a remote management message from a remote host (30a, 30b) comprises receiving an IP packet, said IP packet comprising said remote management message, a sender IP address and a destination IP address (IP1; IP2), and wherein the method comprises:
- determining said target profile (P1; P2) of said remote management command as a function of said sender IP address and/or said destination IP address (IP1; IP2) .

5. The method according to Claim 3 or Claim 4, wherein said determining said target profile (P1; P2) of said remote management command comprises:
- setting said target profile to said first profile (P1), when said destination phone number corresponds to said first phone number (PN1) or said destination IP address corresponds to said first IP address (IP1); and
- setting said target profile to said second profile (P2), when said destination phone number corresponds to said second phone number (PN2) or said destination IP address corresponds to said second IP address (IP2).

6. The method according to Claim 3 or Claim 4, wherein said determining said target profile (P1; P2) of said remote management command comprises:
- determining whether said sender phone number or said sender IP address is associated with the mobile network of said first (MNO1) or said second (MNO2) mobile network operator,
- setting said target profile to said first profile (P1), when said sender phone number or said sender IP address is associated with the mobile network of said first mobile network operator (MNO1); and
- setting said target profile to said second profile (P2), when said sender phone number or said sender IP address is associated with the mobile network of said second mobile network operator (MNO2).

7. The method according to Claim 1 or Claim 2, comprising:
- opening a first socket connection for said first profile (P1) and a second socket connection for said second profile (P2), wherein said receiving a remote management message from a remote host (30a, 30b) comprises receiving an IP packet through said first or said second socket connection, said IP packet comprising said remote management message,
- setting said target profile to said first profile (P1), when said IP packet has been received through said first socket connection; and
- setting said target profile to said second profile (P2), when said IP packet has been received through said second socket connection.

8. The method according to Claim 1 or Claim 2, comprising:
- performing a request to a first URL for said first profile (P1) and/or performing a request to a second URL for said second profile (P2), wherein said receiving a remote management message from a remote host (30a, 30b) comprises receiving a response IP packet in response to a request to said first or said second URL, said response IP packet comprising said remote management message,
- setting said target profile to said first profile (P1) when said response IP packet is received in response to a request to said first second URL; and
- setting said target profile to said second profile (P2) when said response IP packet is received in response to a request to said second URL.

9. A multi-subscription SIM module (108a) comprising at least one processor (1082a) and at least one memory (1084a) adapted to store at least a first (P1) and a second (P2) profile associated with a respective first (MNO1) and a second (MNO2) mobile network operator, such that respective profile data (APP, AUTH, OTA, FS) may be associated with each profile (P1, P2), wherein said multi-subscription SIM module (108a) is an UICC or embedded UICC, wherein said multi-subscription SIM module (108a) is configured for implementing the method of any of the previous claims 1 to 8.

10. A computer-program product that can be loaded into the memory of at least one processor and comprises portions of software code for implementing the steps of the method according to any of Claims 1 to 8.

## Patentansprüche

1. Verfahren zur Durchführung einer Fernverwaltung eines SIM-Moduls (108a) mit Mehrfachabonnement, wobei das SIM-Modul (108a) mit Mehrfachabonnement mindestens einen Speicher (1084a) umfasst, eingerichtet zum Speichern eines ersten (P1) und eines zweiten (P2) Profils, assoziiert mit einem entsprechenden ersten (MN01) und einem zweiten (MN02) Mobilfunknetzbetreiber, sodass entsprechende Profildaten (APP, AUTH, OTA, FS) mit jedem Profil (P1, P2) assoziiert werden können, wobei das SIM-Modul (108a) mit Mehrfachabonnement eine UICC oder eingebettete UICC ist, wobei das Verfahren das Durchführen der folgenden Schritte in dem SIM-Modul (108a) mit Mehrfachabonnement umfasst:
- Empfangen einer Fernverwaltungsnachricht von einem entfernten Host (30a, 30b), wobei die Fernverwaltungsnachricht umfasst:
a) einen Fernverwaltungsbefehl, und
b) eine Absenderadresse und/oder eine Zieladresse (PN1; PN2; IP1; IP2);
- Verarbeiten der Fernverwaltungsnachricht, um die Absenderadresse und/oder die Zieladresse (PN1; PN2; IP1; IP2) zu ermitteln;
- Festlegen eines Zielprofils (P1; P2) des Fernverwaltungsbefehls als eine Funktion der Absenderadresse und/oder der Zieladresse (PN1; PN2; IP1; IP2); und
- Ausführen des Fernverwaltungsbefehls, um mit den Profildaten des Zielprofils (P1; P2) zu interagieren.

2. Verfahren nach Anspruch 1, wobei die Profildaten (APP, AUTH, OTA, FS) mindestens eines umfassen von
- einer oder mehreren Anwendungen (APP), wie z. B. einem Teilnehmer-Identitätsmodul (SIM_APP),
- Authentifizierungsdaten (AUTH), wobei das SIM-Modul (108a) ausgelegt ist für den Zugang zum Mobilfunknetz des ersten Mobilfunknetzbetreibers (MN01) mit den Authentifizierungsdaten (AUTH) des ersten Profils (P1) und zum Mobilfunknetz des zweiten Mobilfunknetzbetreibers (MN02) mit den Authentifizierungsdaten (AUTH) des zweiten Profils (P2) ;
- einem Luftschnittstellen (OTA)-Schlüssel, wobei die Fernverwaltungsnachricht verschlüsselt ist und wobei das SIM-Modul (108a) ausgelegt ist zum Entschlüsseln der Fernverwaltungsnachricht mit dem Luftschnittstellen-(OTA)-Schlüssel, und/oder
- einem Dateisystem (FS) zum Speichern von Dateien, wie z. B. einer bevorzugten Roaming-Liste und/oder Anwendungen.

3. Verfahren nach Anspruch 1 oder Anspruch 2, wobei eine erste Rufnummer (PN1) mit dem ersten Profil (P1) assoziiert ist und/oder eine zweite Rufnummer (PN2) mit dem zweiten Profil (P2) assoziiert ist, wobei das Empfangen einer Fernverwaltungsnachricht von einem entfernten Host (30a, 30b) das Empfangen einer Kurznachricht umfasst, wobei die Kurznachricht die Fernverwaltungsnachricht, eine Absenderrufnummer und eine Zielrufnummer (PN1; PN2) umfasst und wobei das Verfahren umfasst:
- Ermitteln des Zielprofils (P1; P2) des Fernverwaltungsbefehls als eine Funktion der Absenderrufnummer und/oder der Zielrufnummer (PN1; PN2) .

4. Verfahren nach Anspruch 1 oder Anspruch 2, wobei eine erste IP-Adresse (IP1) mit dem ersten Profil (P1) assoziiert ist und eine zweite IP-Adresse (IP1) mit dem zweiten Profil (P2) assoziiert ist, wobei das Empfangen einer Fernverwaltungsnachricht von einem entfernten Host (30a, 30b) das Empfangen eines IP-Pakets umfasst, wobei das IP-Paket die Fernverwaltungsnachricht, eine Absender-IP-Adresse und eine Ziel-IP-Adresse (IP1; IP2) umfasst und wobei das Verfahren umfasst:
- Festlegen des Zielprofils (P1; P2) des Fernverwaltungsbefehls als eine Funktion der Absender-IP-Adresse und/oder der Ziel-IP-Adresse (IP1; IP2).

5. Verfahren nach Anspruch 3 oder Anspruch 4, wobei das Festlegen des Zielprofils (P1; P2) des Fernverwaltungsbefehls umfasst:
- Einstellen des Zielprofils auf das erste Profil (P1), wenn die Zielrufnummer der ersten Rufnummer (PN1) entspricht oder wenn die Ziel-IP-Adresse der ersten IP-Adresse (IP1) entspricht; und
- Einstellen des Zielprofils auf das zweite Profil (P2), wenn die Zielrufnummer der zweiten Rufnummer (PN2) entspricht oder wenn die Ziel-IP-Adresse der zweiten IP-Adresse (IP2) entspricht.

6. Verfahren nach Anspruch 3 oder Anspruch 4, wobei das Festlegen des Zielprofils (P1; P2) des Fernverwaltungsbefehls umfasst:
- Ermitteln, ob die Absenderrufnummer oder die Absender-IP-Adresse mit dem Mobilfunknetz des ersten (MN01) oder des zweiten (MN02) Mobilfunknetzbetreibers assoziiert ist;
- Festlegen des Zielprofils auf das erste Profil (P1), wenn die Absenderrufnummer oder die Absender-IP-Adresse mit dem Mobilfunknetz des ersten Mobilfunknetzbetreibers (MN01) assoziiert ist; und
- Festlegen des Zielprofils auf das zweite Profil (P2), wenn die Absenderrufnummer oder die Absender-IP-Adresse mit dem Mobilfunknetz des zweiten Mobilfunknetzbetreibers (MN02) assoziiert ist.

7. Verfahren nach Anspruch 1 oder Anspruch 2, umfassend:
- Öffnen einer ersten Socketverbindung für das erste Profil (P1) und einer zweiten Socketverbindung für das zweite Profil (P2), wobei das Empfangen einer Fernverwaltungsnachricht von einem entfernten Host (30a, 30b) das Empfangen eines IP-Pakets durch die erste oder die zweite Socketverbindung umfasst, wobei das IP-Paket die Fernverwaltungsnachricht umfasst;
- Einstellen des Zielprofils auf das erste Profil (P1), wenn das IP-Paket durch die erste Socketverbindung empfangen worden ist; und
- Einstellen des Zielprofils auf das zweite Profil (P2), wenn das IP-Paket durch die zweite Socketverbindung empfangen worden ist.

8. Verfahren nach Anspruch 1 oder Anspruch 2, umfassend:
- Durchführen einer Anforderung des ersten Profils (P1) zu einer ersten URL und/oder Durchführen einer Anforderung des zweiten Profils (P2) zu einer zweiten URL, wobei das Empfangen einer Fernverwaltungsnachricht von einem entfernten Host (30a, 30b) das Empfangen eines Antwort-IP-Pakets in Reaktion auf eine Anforderung zu der ersten oder der zweiten URL umfasst, wobei das Antwort-IP-Paket die Fernverwaltungsnachricht umfasst,
- Einstellen des Zielprofils auf das erste Profil (P1), wenn das Antwort-IP-Paket in Reaktion auf eine Anforderung zu der ersten zweiten URL empfangen wird, und
- Einstellen des Zielprofils auf das zweite Profil (P2), wenn das Antwort-IP-Paket in Reaktion auf eine Anforderung zu der zweiten URL empfangen wird.

9. SIM-Modul (108a) mit Mehrfachabonnement, umfassend mindestens einen Prozessor (1082a) und mindestens einen Speicher (1084a), eingerichtet zum Speichern mindestens eines ersten (P1) und eines zweiten (P2) Profils, assoziiert mit einem entsprechenden ersten (MN01) und einem zweiten (MN02) Mobilfunknetzbetreiber, sodass die entsprechenden Profildaten (APP, AUTH, OTA, FS) mit jedem Profil (P1, P2) assoziiert werden können, wobei das SIM-Modul (108a) mit Mehrfachabonnement eine UICC oder eingebettete UICC ist, wobei das SIM-Modul (108a) mit Mehrfachabonnement dafür ausgelegt ist, das Verfahren nach einem der vorstehenden Ansprüche 1 bis 8 zu implementieren.

10. Rechnerprogrammprodukt, das in den Speicher mindestens eines Prozessors geladen werden kann und Teile von Softwarecode zum Implementieren der Schritte des Verfahrens nach einem der Ansprüche 1 bis 8 umfasst.

## Revendications

1. Procédé de gestion à distance d'un module SIM à abonnements multiples (108a), ledit module SIM à abonnements multiples (108a) comprenant au moins une mémoire (1084a) adaptée pour mémoriser un premier (P1) et un deuxième (P2) profil associé à un premier (MNO1) et un deuxième (MNO2) opérateur de réseau mobile respectif, de telle manière que des données de profil respectives (APP, AUTH, OTA, FS) peuvent être associées à chaque profil (P1, P2), dans lequel ledit module SIM à abonnements multiples (108a) est une carte UICC ou une carte UICC intégrée, le procédé comprenant l'exécution des étapes suivantes dans ledit module SIM à abonnements multiples (108a) :
- recevoir d'un hôte distant (30a, 30b) un message de gestion à distance, ledit message de gestion à distance comprenant :
a) une commande de gestion à distance, et
b) une adresse d'expéditeur et/ou une adresse de destination (PN1 ; PN2 ; IP1 ; IP2) ;
- traiter ledit message de gestion à distance afin de déterminer ladite adresse d'expéditeur et/ou ladite adresse de destination (PN1 ; PN2 ; IP1 ; IP2) ;
- déterminer un profil cible (P1 ; P2) de ladite commande de gestion à distance en fonction de ladite adresse d'expéditeur et/ou ladite adresse de destination (PN1 ; PN2 ; IP1 ; IP2) ; et
- exécuter ladite commande de gestion à distance afin d'interagir avec les données de profil dudit profil cible (P1 ; P2).

2. Procédé selon la revendication 1, dans lequel lesdites données de profil (APP, AUTH, OTA, FS) comprennent au moins un des éléments suivants :
- une ou plusieurs applications (APP), comme un module d'identification de l'abonné (SIM_APP),
- des données d'authentification (AUTH), ledit module SIM (108a) étant configuré pour accéder au réseau mobile dudit premier opérateur de réseau mobile (MNO1) avec les données d'authentification (AUTH) dudit premier profil (P1) et au réseau mobile dudit deuxième opérateur de réseau mobile (MNO2) avec les données d'authentification (AUTH) dudit deuxième profil (P2) ;
- une clé de liaison radio (OTA), dans lequel ledit message de gestion à distance est crypté, et dans lequel le module SIM (108a) est configuré pour décrypter ledit message de gestion à distance avec ladite clé de liaison radio (OTA), et/ou
- un système de fichiers (FS) pour stocker des fichiers, comme une liste d'itinérance préférée et/ou des applications.

3. Procédé selon la revendication 1 ou 2, dans lequel un premier numéro de téléphone (PN1) est associé audit premier profil (P1) et/ou un deuxième numéro de téléphone (PN2) est associé audit deuxième profil (P2), dans lequel ladite réception d'un message de gestion à distance d'un hôte distant (30a, 30b) comprend la réception d'un message court, ledit message court comprenant ledit message de gestion à distance, un numéro de téléphone d'expéditeur et un numéro de téléphone de destination (PN1 ; PN2), et dans lequel le procédé comprend l'étape suivante :
- déterminer ledit profil cible (P1 ; P2) de ladite commande de gestion à distance en fonction dudit numéro de téléphone d'expéditeur et/ou dudit numéro de téléphone de destination (PN1 ; PN2).

4. Procédé selon la revendication 1 ou 2, dans lequel une première adresse IP (IP1) est associée audit premier profil (P1) et/ou une deuxième adresse IP (IP1) est associée audit deuxième profil (P2), dans lequel ladite réception d'un message de gestion à distance d'un hôte distant (30a, 30b) comprend la réception d'un paquet IP, ledit paquet IP comprenant ledit message de gestion à distance, une adresse IP d'expéditeur et une adresse IP de destination (IP1 ; IP2), et dans lequel le procédé comprend l'étape suivante :
- déterminer ledit profil cible (P1 ; P2) de ladite commande de gestion à distance en fonction de ladite adresse IP d'expéditeur et/ou de ladite adresse IP de destination (IP1 ; IP2).

5. Procédé selon la revendication 3 ou 4, dans lequel ladite détermination dudit profil cible (P1 ; P2) de ladite commande de gestion à distance comprend les étapes suivantes :
- donner audit profil cible la valeur dudit premier profil (P1), quand ledit numéro de téléphone de destination correspond audit premier numéro de téléphone (PN1) ou quand ladite adresse IP de destination correspond à ladite première adresse IP (IP1) ; et
- donner audit profil cible la valeur dudit deuxième profil (P2), quand ledit numéro de téléphone de destination correspond audit deuxième numéro de téléphone (PN2) ou quand ladite adresse IP de destination correspond à ladite deuxième adresse IP (IP2).

6. Procédé selon la revendication 3 ou 4, dans lequel ladite détermination dudit profil cible (P1 ; P2) de ladite commande de gestion à distance comprend les étapes suivantes :
- déterminer si ledit numéro de téléphone d'expéditeur ou ladite adresse IP d'expéditeur est associé(e) au réseau mobile dudit premier (MNO1) ou dudit deuxième (MNO2) opérateur de réseau mobile,
- donner audit profil cible la valeur dudit premier profil (P1), quand ledit numéro de téléphone d'expéditeur ou ladite adresse IP d'expéditeur est associé(e) au réseau mobile dudit premier opérateur de réseau mobile (MNO1) ; et
- donner audit profil cible la valeur dudit deuxième profil (P2), quand ledit numéro de téléphone d'expéditeur ou ladite adresse IP d'expéditeur est associé(e) au réseau mobile dudit deuxième opérateur de réseau mobile (MNO2).

7. Procédé selon la revendication 1 ou 2, comprenant les étapes suivantes :
- ouvrir une première connexion de prise pour ledit premier profil (P1) et une deuxième connexion de prise pour ledit deuxième profil (P2), dans lequel ladite réception d'un message de gestion à distance d'un hôte distant (30a, 30b) comprend la réception d'un paquet IP via ladite première ou deuxième connexion de prise, ledit paquet IP comprenant ledit message de gestion à distance,
- donner audit profil cible la valeur dudit premier profil (P1), quand ledit paquet IP a été reçu via ladite première connexion de prise ; et
- donner audit profil cible la valeur dudit deuxième profil (P2), quand ledit paquet IP a été reçu via ladite deuxième connexion de prise.

8. Procédé selon la revendication 1 ou 2, comprenant les étapes suivantes :
- réaliser une demande à une première adresse universelle pour ledit premier profil (P1) et/ou réaliser une demande à une deuxième adresse universelle pour ledit deuxième profil (P2), dans lequel ladite réception d'un message de gestion à distance d'un hôte distant (30a, 30b) comprend la réception d'un paquet IP de réponse en réponse à une demande transmise à ladite première ou à ladite deuxième adresse universelle, ledit paquet IP de réponse comprenant ledit message de gestion à distance,
- donner audit profil cible la valeur dudit premier profil (P1), quand ledit paquet IP de réponse est reçu en réponse à une demande transmise à ladite première adresse universelle ; et
- donner audit profil cible la valeur dudit deuxième profil (P2), quand ledit paquet IP de réponse est reçu en réponse à une demande transmise à ladite deuxième adresse universelle.

9. Module SIM à abonnements multiples (108a) comprenant au moins un processeur (1082a) et au moins une mémoire (1084a) adaptée pour mémoriser un premier (P1) et un deuxième (P2) profil associé à un premier (MNO1) et un deuxième (MNO2) opérateur de réseau mobile respectif, de telle manière que des données de profil respectives (APP, AUTH, OTA, FS) peuvent être associées à chaque profil (P1, P2), dans lequel ledit module SIM à abonnements multiples (108a) est une carte UICC ou une carte UICC intégrée, dans lequel ledit module SIM à abonnements multiples (108a) est configuré pour mettre en œuvre le procédé de l'une quelconque des précédentes revendications 1 à 8.

10. Produit de programme informatique pouvant être chargé dans la mémoire d'au moins un processeur et comprenant des parties de code logiciel pour mettre en œuvre les étapes du procédé selon l'une quelconque des revendications 1 à 8.
